# EUROPÄISCHE PATENTSCHRIFT

(11) **EP 3 492 395 B1**
(45) Veröffentlichungstag und Bekanntmachung des Hinweises auf die Patenterteilung: **12.08.2020**
(21) Anmeldenummer: 17001962.4
(22) Anmeldetag: 30.11.2017
(51) Int. Cl.: B65B 1/36, B65B 1/46, A61J 3/07

(54) **VORRICHTUNG UND VERFAHREN ZUM DOSIERTEN BEFÜLLEN EINES BEHÄLTNISSES MIT EINEM FÜLLGUT**
METHOD AND DEVICE FOR METERED FILLING OF CONTAINERS WITH A PRODUCT
DISPOSITIF ET PROCÉDÉ DESTINÉS AU REMPLISSAGE DOSÉ DE RÉCIPIENTS À L'AIDE D'UN PRODUIT DE REMPLISSAGE

(43) Veröffentlichungstag der Anmeldung: 05.06.2019
(73) Patentinhaber: Harro Höfliger Verpackungsmaschinen GmbH, 71573 Allmersbach im Tal (DE)
(72) Erfinder: Sternberger-Rützel, Elke, 71573 Allmersbach im Tal (DE); Gaus, Philipp, 71573 Allmersbach im Tal (DE); Bohne, Sabine, 71573 Allmersbach im Tal (DE); Röhrle, Michael, 71573 Allmersbach im Tal (DE); Hofmeister, Jonas, 71573 Allmersbach im Tal (DE); Müller, Daniel, 71573 Allmersbach im Tal (DE)
(74) Vertreter: Schmid, Barbara

(56) Entgegenhaltungen:
- EP-A1- 0 773 160
- WO-A1-97/41031
- WO-A1-2012/035473
- WO-A2-2008/114122

## Beschreibung

### TECHNISCHES GEBIET

Die Erfindung betrifft eine Vorrichtung und ein Verfahren zum dosierten Befüllen eines Behältnisses mit einem riesel- oder fließfähigen Füllgut. Derartige Vorrichtungen werden insbesondere bei der Herstellung von Nahrungsergänzungsmitteln oder Medikamenten eingesetzt. In diesen Fällen wird ein wirkstoffhaltiges Füllgut in ein geeignetes Behältnis gefüllt, so dass das Füllgut und damit auch der Wirkstoff beispielsweise als Kapsel geschluckt werden kann.

### STAND DER TECHNIK

Abhängig von der Dosierform sind zwei Hauptgruppen von Darreichungsformen für Wirkstoffe bekannt. Zum Einen kann der Wirkstoff bereits korrekt vordosiert sein, beispielsweise in Form von Tabletten, befüllten Hartgelatinekapseln oder Injektionsampullen. Dabei enthält jede Einheit der Darreichungsform bereits die korrekte, vorbestimmte Dosis des Wirkstoffs. Zum Anderen gibt es Darreichungsformen in nicht-dosierter Form aus einem Reservoir (Behälter), beispielsweise in Form von Salben, Pulvern, Granulaten oder Pellets. In diesem Fall wird die jeweils benötigte Menge an Produkt und damit auch an Wirkstoff individuell entnommen. Solange der jeweilige Wirkstoff ein großes therapeutisches Fenster aufweist, kann eine solche individuelle Entnahme unmittelbar durch den Patienten beziehungsweise Konsumenten erfolgen. Sofern der Wirkstoff jedoch nur ein sehr schmales therapeutisches Fenster aufweist - die Grenze zwischen einer noch unwirksamen Dosis und einer Dosis, die bereits unerwünschte Nebenwirkungen hervorruft, also sehr gering ist - sollte eine individuelle Entnahme des Wirkstoffs nicht mehr unkontrolliert durch den Patienten selbst erfolgen.

Darreichungsformen mit vordosierten Wirkstoffen werden insbesondere dann industriell hergestellt, wenn die jeweilige Dosierung in großer Stückzahl bereitgestellt werden soll. Dies ist beispielsweise bei Antibiotika der Fall. Andere Therapeutika benötigen dagegen eine patientenindividuelle Dosierung, die sich beispielsweise auf das jeweilige Körpergewicht bezieht. In diesem Fall ist eine industrielle Fertigung regelmäßig kostenintensiv und damit wirtschaftlich ungünstig. Daher erfolgt regelmäßig eine individuelle Dosierung in der Apotheke oder Krankenhausapotheke. Beispielsweise müssen eine Reihe von Onkologika und Psychopharmaka individuell dosiert werden. Gerade in der Geriatrie und in der Pädiatrie müssen häufig auch vergleichsweise übliche Medikamente wie Antibiotika individuell dosiert werden. Dies ist erforderlich, um die Unterschiede im Körpergewicht und im körperlichen Zustand zu berücksichtigen und teilweise auch um auf die Besonderheiten des Stoffwechsels gerade bei Kleinkindern Rücksicht zu nehmen.

Beim Dosieren eines Wirkstoffs zur individuellen Abgabe an einen Patienten wird dieser regelmäßig beispielsweise in der Krankenhausapotheke abgewogen. Alternativ dazu kann auch ein bestimmtes Volumen des Wirkstoffs abgemessen werden, das der erforderlichen Dosis des Wirkstoffs entspricht. Um dem Patienten die Einnahme zu erleichtern, wird die individuelle Dosis häufig in Hartgelatinekapseln gefüllt. Derartige Kapseln, die aus einem Kapselunterteil und einem Kapseloberteil zusammengefügt sind, sind eine weit verbreitete Verabreichungsform von pulver- oder pelletförmigen Wirkstoffen. Sie können in sehr großen Stückzahlen industriell hergestellt und befüllt werden, aber auch in Apotheken zur Herstellung von individuellen Einzeldosen verwendet werden.

Heutzutage werden zur Darreichung von Wirkstoffen und/oder Nahrungsergänzungsmitteln auch Trinkhalme eingesetzt. Ein solcher Trinkhalm ist beispielsweise aus der EP 1 843 683 B1 bekannt. Der Wirkstoff liegt dabei insbesondere in Form von Granulaten, Pellets, Mikrotabletten oder Pulvern vor, und weist vorzugsweise eine Größe im Bereich von etwa 250 Mikrometern bis etwa 4 Millimeter auf. Die durchschnittliche Größe liegt dabei bei etwa 250 Mikrometern bis 710 Mikrometern. Der Wirkstoff befindet sich in diesem Fall bereits in dem Trinkhalm und wird vorzugsweise mit einer Flüssigkeit aus dem Trinkhalm in den Mund des Patienten gesaugt und anschließend geschluckt. Dies erleichtert dem Patienten die Einnahme seines Wirkstoffs, weil der Wirkstoff in der Regel sehr viel leichter geschluckt werden kann. Dies kann insbesondere bei Patienten mit Schluckbeschwerden (beispielsweise in der Pädiatrie und/oder der Geriatrie) vorteilhaft sein. Durch die Aufnahme des Wirkstoffs als in-situ-Suspension mit der Flüssigkeit kann der Geschmack des Wirkstoffs beispielsweise durch die Flüssigkeit überdeckt werden. Der Patient kann den Geschmack durch unterschiedliche Getränke nach seinen eigenen Wünschen gestalten. Bei der Verwendung von Pellets sind diese regelmäßig funktionell beschichtet. Auf diese Weise kann ebenfalls eine Geschmacksmaskierung möglich sein. Darüber hinaus kann auch ein bestimmtes Freisetzungsprofil erhalten werden. Die Trinkhalme werden regelmäßig industriell hergestellt und enthalten daher eine exakt vorgegebene Dosis eines Medikaments. Dokument WO2008114122 offenbart eine Vorrichtung zum dosierten Befüllen eines Behältnisses, wobei eine Dosierscheibe in eine einzige Richtung bewegt wird.

### DARSTELLUNG DER ERFINDUNG

Ausgehend von diesem vorbekannten Stand der Technik liegt der Erfindung die Aufgabe zugrunde, eine verbesserte Vorrichtung zum dosierten Befüllen eines Behältnisses mit einem wirkstoffhaltigen Füllgut anzugeben, welches insbesondere eine individuelle Befüllung der Behältnisse in Apotheken und/oder Krankenhausapotheken ermöglicht. Dabei sollen insbesondere geringere Stückzahlen an Behältnissen kostengünstig, rasch und zuverlässig befüllt werden können.

Die erfindungsgemäße Vorrichtung zum dosierten Befüllen eines Trinkhalms mit einem Füllgut ist durch die Merkmale des Hauptanspruchs 1 gegeben. Das erfindungsgemäße Verfahren zum dosierten Befüllen eines Behältnisses mit einem Füllgut ist durch die Merkmale des nebengeordneten Anspruchs 12 gegeben. Sinnvolle Weiterbildungen der Erfindung sind Gegenstand von sich an diese Ansprüche anschließenden weiteren Ansprüchen.

Die erfindungsgemäße Vorrichtung zum dosierten Befüllen eines Trinkhalms mit einem Füllgut besitzt eine Aufnahmeeinheit zur Aufnahme des Behältnisses und zumindest einen Materialspeicher als Vorratsbehälter für das zu befüllende Füllgut. Mittels einer Befülleinheit kann eine definierte Menge des Füllguts aus dem zumindest einen Materialspeicher entnommen und in das Behältnis überführt werden. Erfindungsgemäß weist die Befülleinheit zumindest eine Dosierkammer auf, die verschieblich gelagert ist. Dadurch kann die zumindest eine Dosierkammer abwechselnd in einer erste Position und in einer zweiten Position vorhanden sein. In ihrer ersten Position steht die Dosierkammer mit dem Materialspeicher in Kontakt, so dass Füllgut aus dem Materialspeicher in die Dosierkammer eingefüllt werden kann. In ihrer zweiten Position ist die Dosierkammer oberhalb des zu befüllenden Behältnisses angeordnet, so dass das in der Dosierkammer befindliche Füllgut in das Behältnis entleert werden kann.

Durch die Verwendung von lediglich zwei möglichen Positionen für die Dosierkammern kann die Vorrichtung sehr kompakt gebaut werden. Die Vorrichtung eignet sich daher insbesondere für die Befüllung von verhältnismäßig wenigen Behältnissen mit einer bestimmten Wirkstoffdosis. Die erfindungsgemäße Vorrichtung kann dabei insbesondere in Apotheken oder Krankenhäusern eingesetzt werden, um die für einen Patienten individuell benötigte Wirkstoffmenge in ein geeignetes Behältnis zu füllen.

Die Dosierkammer ist in Hinrichtung und in die dazu Gegenrichtung verschiebbar. Eine solche Hin- und Herbewegung kann regelmäßig mit nur einer Hand vollzogen werden, gleichzeitig ist ein zwischenzeitliches Absetzen und Umgreifen regelmäßig nicht erforderlich. Dies erleichtert die Bedienung der erfindungsgemäßen Vorrichtung für den Abfüller.

In einer ersten Ausführungsform kann die Vorrichtung lediglich die oben beschriebene eine Dosierkammer aufweisen. In diesem Fall wäre das Durchführen der Hinbewegung und der Rückbewegung erforderlich, um einen Befülldurchgang abzuschließen. Vorzugsweise kann die Dosierkammer in diesem Fall längsverschieblich gelagert sein. Eine solche Lagerung ist konstruktiv einfach umzusetzen und ermöglicht gleichzeitig eine einfache und komfortable Bedienung.

In einer zweiten Ausführungsform kann die Vorrichtung eine erste Dosierkammer und eine zweite Dosierkammer aufweisen. Die beiden Dosierkammern können dann jeweils abwechselnd in einer ersten und in einer zweiten Position vorhanden sein. Während sich eine der beiden Dosierkammern in ihrer ersten Position befindet und mit dem zu befüllenden Füllgut befüllt wird, befindet sich die zweite der beiden Dosierkammern in ihrer zweiten Position und entleert das in der Dosierkammer befindliche Füllgut in das Behältnis. Beide Dosierkammern müssen in ihrer zweiten Position in der identischen Position oberhalb des Behältnisses vorhanden sein, um eine exakte und reproduzierbare Befüllung des Behältnisses zu ermöglichen. Die erste Position der beiden Dosierkammern kann dagegen unterschiedlich sein, solange beide Dosierkammern in ihrer jeweiligen ersten Position mit der gleichen Menge desselben Füllguts befüllt werden können.

In einer konstruktiv besonders einfachen Ausführungsform können die beiden Dosierkammern jeweils durch eine Drehbewegung von ihrer ersten Position in ihre zweite Position verschoben werden. Sofern die Drehbewegung dabei jeweils einen Winkel von 180 Grad umfasst, können die beiden Dosierkammern durch die Drehbewegung ihre Positionen genau tauschen. In diesem Fall wären beide Dosierkammern in ihrer zweiten Position an identischen Positionen unterhalb des Materialspeichers vorhanden.

In einer vorteilhaften Ausführungsform können zwei Materialspeicher vorhanden sein. In diesem Fall könnte die erste Dosierkammer in ihrer ersten Position unterhalb des ersten Materialspeichers und in ihrer zweiten Position oberhalb des Behältnisses vorhanden sein. Dagegen könnte die zweite Dosierkammer in ihrer ersten Position unterhalb des zweiten Materialspeichers und in ihrer zweiten Position oberhalb des Behältnisses vorhanden sein. Auf diese Weise könnte die erste Dosierkammer ein erstes Füllgut (mit einem ersten Wirkstoff) in das Behältnis dosieren, während die zweite Dosierkammer ein davon unterschiedliches zweites Füllgut (mit einem zweiten Wirkstoff) in das Behältnis dosieren könnte. Die beiden unterschiedlichen Füllgüter könnten identische oder auch unterschiedliche Wirkstoffkonzentrationen aufweisen. Um zu verhindern, dass ein Teil des Füllguts beim Entleeren der Dosierkammer an dem Behältnis vorbeifällt, kann zwischen der zumindest einen Dosierkammer und dem oberen Rand des Behältnisses ein Trichterelement angeordnet sein.

Der Trinkhalm sollte in diesem Fall an seinem unteren Ende bereits durch geeignete Mittel abgedichtet sein, so dass das Füllgut nicht unten aus dem Trinkhalm herausfallen kann. Nach der Entnahme des Trinkhalms aus der Vorrichtung kann dieser mittels einer separaten Kappe verschlossen werden. Durch die erfindungsgemäße Vorrichtung ist somit erstmals eine individuelle Befüllung von geringen Stückzahlen an Trinkhalmen möglich. Dies ermöglicht neue Einsatzgebiete des Trinkhalms bei der Verabreichung von Wirkstoffen an Patienten.
Vorzugsweise kann die erfindungsgemäße Vorrichtung über eine Wägeeinheit verfügen. Durch die Wägeeinheit kann das Gewicht des eingefüllten Füllstoffs exakt bestimmt werden. Die Wägeeinheit könnte dabei das Gewicht des noch im Materialspeicher befindlichen Füllguts und/oder das Gewicht des bereits im Behältnis befindlichen Füllstoffs messen.

Alternativ oder zusätzlich dazu könnte eine Zähleinheit vorhanden sein. Durch die Zähleinheit kann die Anzahl der Positionswechsel der zumindest einen Dosierkammer gezählt und angezeigt werden. In der Regel wird ein Behältnis durch mehrere Dosen an Füllgut befüllt. Der Wirkstoff ist daher regelmäßig in einer verhältnismäßig geringen Konzentration im Füllgut vorhanden, so dass unterschiedliche Wirkstoffdosen durch die Abfüllung von einer definierten Anzahl an Dosierkammerfüllungen mit Füllgut erreicht werden können. Die Zähleinheit kann dabei Fehler beim Abfüllen verhindern, die beispielsweise durch Ablenkung vorkommen können.

In einer besonders bevorzugten Ausführungsform kann eine Druckereinheit vorhanden sein. Durch die Druckereinheit ist eine automatische Dokumentation der Abfüllung möglich. Dies kann nachträglich oder parallel zur Abfüllung erfolgen.

Bei dem erfindungsgemäßen Verfahren zum dosierten Befüllen eines Behältnisses mit einem Füllgut wird zunächst eine Dosierkammer unterhalb eines Materialspeichers für das Füllgut positioniert. In diese Dosierkammer kann dann ein definierter Teil des Füllguts eingefüllt werden. Anschließend wird die Dosierkammer ein Stück weit aus dieser ersten Position unterhalb des Materialspeichers in eine zweite Position verschoben. In ihrer zweiten Position befindet sich die Dosierkammer oberhalb des zu befüllenden Behältnisses, so dass das Füllgut aus der Dosierkammer in das Behältnis fallen kann. Anschließend wird die Dosierkammer wieder in ihre erste Position verschoben, so dass diese erneut mit Füllgut befüllt werden kann.

Vorzugsweise werden jeweils mehrere Füllgutportionen in dasselbe Behältnis gefüllt. Das im Materialspeicher vorhandene Füllgut kann dadurch für die Befüllung von verschiedenen erforderlichen Dosen an Wirkstoff verwendet werden. Dies kann in einer besonders einfachen Ausführungsform dadurch realisiert werden, dass die Dosierkammer mehrmals hintereinander aus ihrer ersten Position in ihre zweite Position und wieder zurück in die erste Position überführt wird.

In einer bevorzugten Ausführungsform können eine erste Dosierkammer und eine zweite Dosierkammer vorhanden sein, die jeweils abwechselnd in ihrer ersten und in ihrer zweiten Position vorhanden sind. Dadurch können die beiden Dosierkammern beim Überführen in die jeweils andere Position die Plätze tauschen. Bei jedem Überführen der Dosierkammern in die jeweils andere Position kann somit eine Portion des Füllguts in das Behältnis eingefüllt werden. Gleichzeitig kann unmittelbar nach dem Wechsel des Behältnisses bereits mit dem Befüllen des nächsten Behältnisses begonnen werden, ohne zunächst Wirkstoff in die Dosierkammer füllen zu müssen.

Die erfindungsgemäße Vorrichtung sowie das erfindungsgemäße Verfahren sind auf keinen speziellen Typ von Füllgut beschränkt. Grundsätzlich kann jeder beliebige Stoff als Füllgut gesehen werden, sofern sich dieser in Einheiten unterteilen lässt, die alle eine im wesentlichen gleich große Menge an Wirkstoff aufweisen. Dies ist insbesondere bei solchen Feststoffen der Fall, die in Form von Granulaten, Pellets oder Mikrotabletten vorliegen. Grundsätzlich können auch Flüssigkeiten entsprechend dosiert werden, insbesondere wenn diese in Form von Mikrokapseln vorliegen. Die Erfindung ist insbesondere bei Füllgütern mit hochpreisigen Wirkstoffen von Interesse, um die Kosten für eine Behandlung nicht unnötig in die Höhe zu treiben. Auch bei Wirkstoffen mit einer geringen Haltbarkeit kann eine individuelle Abfüllung der jeweils benötigten Dosen von Vorteil sein.

Weitere Vorteile und Merkmale der Erfindung sind den in den Ansprüchen ferner angegebenen Merkmalen sowie den nachstehenden Ausführungsbeispielen zu entnehmen.

### KURZE BESCHREIBUNG DER ZEICHNUNG

Die Erfindung wird im Folgenden anhand der in der Zeichnung dargestellten Ausführungsbeispiele näher beschrieben und erläutert. Es zeigen:
- Fig. 1: einen schematischen Längsschnitt durch eine erste Ausführungsform der erfindungsgemäßen Vorrichtung, bei der sich die einzelne Dosierkammer in ihrer ersten Position unterhalb des Materialspeichers befindet,
- Fig. 2: einen schematischen Längsschnitt durch die Vorrichtung gemäß Fig. 1, bei der sich die einzelne Dosierkammer in ihrer zweiten Position oberhalb des Behältnisses befindet,
- Fig. 3: einen schematischen Längsschnitt durch eine zweite Ausführungsform der erfindungsgemäßen Vorrichtung, bei der sich die erste Dosierkammer in ihrer ersten Position unterhalb des Materialspeichers und die zweite Dosierkammer in ihrer zweiten Position oberhalb des Behältnisses befindet,
- Fig. 4: eine perspektivische Ansicht der Vorrichtung gemäß Fig. 3 ohne Materialspeicher und
- Fig. 5: einen schematischen Längsschnitt durch eine dritte Ausführungsform der erfindungsgemäßen Vorrichtung, bei der sich die erste Dosierkammer in ihrer ersten Position unterhalb eines ersten Materialspeichers und die zweite Dosierkammer in ihrer zweiten Position oberhalb des Behältnisses befindet.

### WEGE ZUM AUSFÜHREN DER ERFINDUNG

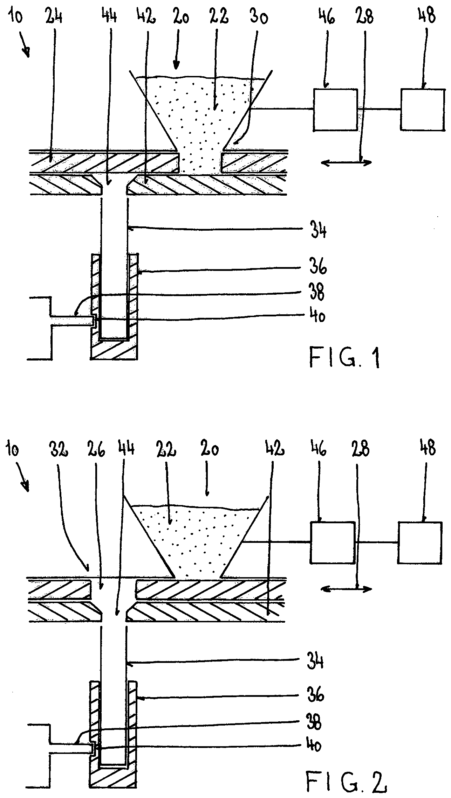

Eine erste Ausführungsform der erfindungsgemäßen Vorrichtung 10 ist in den Fig. 1 und 2 schematisch dargestellt. Die Vorrichtung 10 besitzt einen Materialspeicher 20, in dem ein Füllgut 22 vorrätig gehalten wird. Das Füllgut 22 liegt im vorliegenden Beispielsfall in Form von Pellets vor, die jeweils eine definierte Menge an Wirkstoff enthalten. Somit kann eine gleichbleibende Verteilung der Wirkstoffkonzentration in dem Füllgut 22 erreicht werden. Unterhalb des Materialspeichers 20 befindet sich eine Dosierscheibe 24. In der Dosierscheibe 24 ist im vorliegenden Beispielsfall eine einzelne Dosierkammer 26 ausgeformt. Die Dosierkammer 26 kann eine bestimmte Menge an Füllgut 22 aufnehmen. Die Dosierscheibe 24 kann im vorliegenden Beispielsfall in Längsrichtung 28 hin und her verschoben werden. Dadurch wird die Dosierkammer 26 aus ihrer in Fig. 1 gezeigten ersten Position 30 unterhalb des Materialspeichers 20 in eine in Fig. 2 dargestellte zweite Position 32 überführt. Aus dieser zweiten Position 32 kann die Dosierkammer 26 wieder zurück in ihre erste Position 30 verschoben werden.

In ihrer zweiten Position 32 befindet sich die Dosierkammer 26 oberhalb der Öffnung eines Behältnisses 34. Das Behältnis 34 ist im vorliegenden Beispielsfall als Trinkhalm ausgebildet. Der Trinkhalm 34 ist in einer Aufnahmeeinheit 36 stehend gelagert, so dass die Öffnung des Trinkhalms 34 nach oben weist. Um den Trinkhalm 34 nach der Befüllung entnehmen und gegen einen neuen, leeren Trinkhalm ersetzen zu können, kann die Aufnahmeeinheit 36 aus der Vorrichtung 10 entnommen werden. Nach der Entnahme der Aufnahmeeinheit 36 kann der Trinkhalm 34 entnommen werden. Anschließend kann die Aufnahmeeinheit 36 mit einem neuen Trinkhalm 34 wieder in der Vorrichtung 10 platziert werden. Um sicherzustellen, dass sich die Aufnahmeeinheit 36 und damit auch der zu befüllende Trinkhalm 34 an der richtigen Stelle befindet, weist die Vorrichtung 10 im vorliegenden Beispielsfall ein Rastelement 38 auf. Das Rastelement 38 reicht in der korrekten Position der Aufnahmeeinheit 36 in eine Vertiefung 40 der Aufnahmeeinheit 36 ein und kann dort durch geeignete Gegenmittel einrasten. Erst wenn dieser Kontakt zustande gekommen ist, lässt sich die Dosierscheibe 24 bewegen. Dadurch kann eine Fehlbefüllung verhindert werden. Gleichzeitig kann ausgeschlossen werden, dass bei einer versehentlichen Betätigung der Dosierscheibe 24 ohne eingesetzte Aufnahmeeinheit 36 (beispielsweise beim Transport der Vorrichtung 10) wertvolles Füllgut 22 aus dem Materialspeicher 20 entnommen werden kann.

Um das Einfüllen des Füllguts 22 zu erleichtern, ist unterhalb der Dosierscheibe 24 eine stationäre Platte 42 vorhanden. In dieser Platte 42 ist ein Trichterelement in Form einer trichterförmige Öffnung 44 ausgeformt. Diese trichterförmige Öffnung 44 ist unmittelbar oberhalb des Randbereichs des Trinkhalms 34 positioniert.

Im vorliegenden Beispielsfall wird die Entnahme des Füllguts 22 aus dem Materialspeicher 20 mittels einer Wägeeinheit 46 überprüft. Die Wägeeinheit 46 ermittelt im vorliegenden Beispielsfall das Gewicht des im Materialspeicher 20 vorhandenen Füllguts 22. Alternativ oder zusätzlich dazu könnte auch das Gewicht des bereits im Behältnis 34 vorhandenen Füllguts mittels einer Wägeeinheit ermittelt werden. Die Wägeeinheit 46 ist entsprechend Fig. 1 und 2 mit einer Druckereinheit 48 verbunden. Das Messergebnis kann dadurch über die Druckereinheit 48 ausgegeben und somit dokumentiert werden. Im Gegensatz zu dem hier dargestellten Ausführungsbeispiel könnte auf die Wägeeinheit 46 und/oder die Druckereinheit 48 auch verzichtet werden.

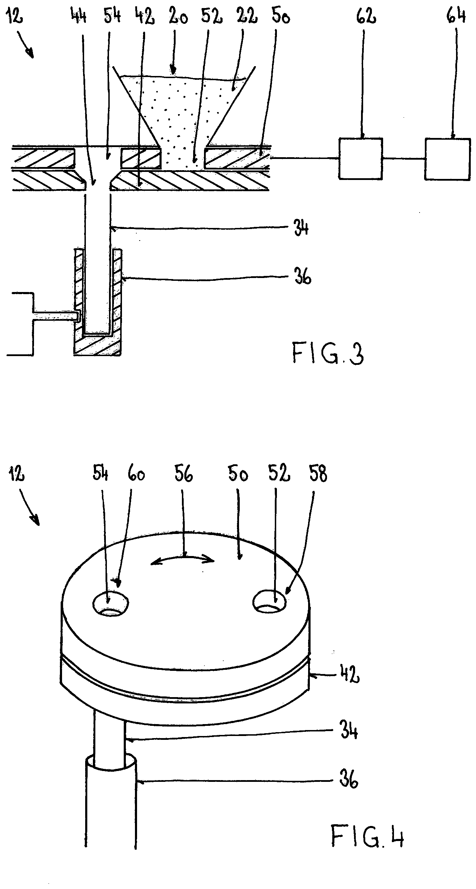

Eine zweite Ausführungsform der erfindungsgemäßen Vorrichtung 12 ist in Fig. 3 und 4 schematisch dargestellt. Die Vorrichtung 12 besitzt einen Materialspeicher 20, in dem ein Füllgut 22 vorrätig gehalten wird. Unterhalb des Materialspeichers 20 befindet sich eine Dosierscheibe 50. In der Dosierscheibe 50 sind im vorliegenden Beispielsfall zwei Dosierkammern 52, 54 ausgeformt. Die beiden Dosierkammern 52, 54 können jeweils eine bestimmte Menge an Füllgut 22 aufnehmen, wobei beide Dosierkammern 52, 54 jeweils exakt die gleiche Menge an Füllgut 22 aufnehmen können. Die Dosierscheibe 50 kann im vorliegenden Beispielsfall in Pfeilrichtung 56 hin und her gedreht werden. Während die erste Dosierkammer 52 in Fig. 3 und 4 in ihrer ersten Position 58 unterhalb des Materialspeichers 20 vorhanden ist, ist die zweite Dosierkammer 54 in Fig. 3 und 4 in ihrer zweiten Position 60 oberhalb des Behältnisses 34 vorhanden. Nach dem Drehen der Dosierscheibe 50 würde sich die erste Dosierkammer 52 in ihrer zweiten Position oberhalb des Trinkhalms 34 und die zweite Dosierkammer 54 in ihrer ersten Position unterhalb des Materialspeichers 20 befinden. Wie die Vorrichtung 10 gemäß Fig. 1 und 2 besitzt auch die Vorrichtung 12 gemäß Fig. 3 und 4 unterhalb der Dosierscheibe 50 eine stationäre Platte 42 mit einer trichterförmigen Öffnung 44.

Im vorliegenden Beispielsfall wird die Entnahme des Füllguts 22 aus dem Materialspeicher 20 mittels einer Zähleinheit 62 überprüft (siehe Fig. 3). Die Zähleinheit 62 ermittelt im vorliegenden Beispielsfall die Anzahl der Positionswechsel der beiden Dosierkammern 52, 54. Die Zähleinheit 62 ist entsprechend Fig. 3 mit einer Druckereinheit 64 verbunden. Das Ergebnis kann dadurch über die Druckereinheit 64 ausgegeben und somit dokumentiert werden. Im Gegensatz zu dem hier dargestellten Ausführungsbeispiel könnte auf die Zähleinheit 62 46 und/oder die Druckereinheit 64 auch verzichtet werden.

Alternativ oder zusätzlich dazu könnte die Vorrichtung 12 gemäß Fig. 3 und 4 auch mit einer Wägeeinheit 46 vergleichbar Fig. 1 und 2 ausgestattet sein. Ebenso könnte die Vorrichtung 10 gemäß Fig. 1 und 2 mit einer Zähleinheit 62 vergleichbar Fig. 3 ausgestattet sein.

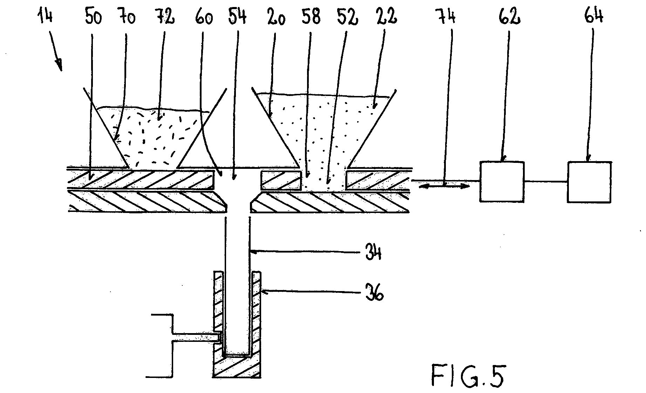

Eine dritte Ausführungsform der erfindungsgemäßen Vorrichtung 14 ist in Fig. 5 schematisch dargestellt. Die Vorrichtung 14 besitzt einen ersten Materialspeicher 20, in dem ein erstes Füllgut 22 vorrätig gehalten wird. Darüber hinaus besitzt die Vorrichtung 14 einen zweiten Materialspeicher 70, in dem ein zweites Füllgut 72 vorrätig gehalten wird. Unterhalb der beiden Materialspeicher 20, 70 befindet sich eine Dosierscheibe 50 mit zwei Dosierkammern 52, 54. Die Dosierscheibe 50 kann im vorliegenden Beispielsfall in Längsrichtung 74 hin und her verschoben werden. Während die erste Dosierkammer 52 in Fig. 5 in ihrer ersten Position 58 unterhalb des ersten Materialspeichers 20 vorhanden ist, ist die zweite Dosierkammer 54 in Fig. 5 in ihrer zweiten Position 60 oberhalb des Behältnisses 34 vorhanden. Nach dem Verschieben der Dosierscheibe 50 würde sich die erste Dosierkammer 52 in ihrer zweiten Position oberhalb des Trinkhalms 34 und die zweite Dosierkammer 54 in ihrer ersten Position unterhalb des zweiten Materialspeichers 70 befinden. Mittels der ersten Dosierkammer 52 kann somit ein erstes Füllgut 22 in das Behältnis 34 gefüllt werden. Die zweite Dosierkammer 54 kann das Behältnis 34 dagegen mit einem zweiten Füllgut 72 befüllen.

Die Vorrichtung 14 könnte vergleichbar den Vorrichtungen 10 und/ oder 12 ebenfalls mit einer Wägeeinheit 46 und/oder einer Zähleinheit 62 jeweils mit oder ohne Druckereinheit 48, 64 ausgestattet sein.

In der Regel ist mehr als eine Füllung der Dosierkammer 26, 52, 54 erforderlich, um die gewünschte Menge an Füllstoff 22, 72 und damit auch die gewünschte Dosis des Wirkstoffs in den Trinkhalm 34 zu füllen. Die Dosierscheibe 24, 50 wird daher regelmäßig mehrmals hin und her bewegt, bevor der Trinkhalm 34 entnommen wird. Bei einer bekannten Wirkstoffkonzentration im Füllgut 22, 72 können auf diese Weise unterschiedliche Wirkstoffmengen exakt abgefüllt werden.

Sofern andere Mengen an Füllgut abgefüllt werden sollen, kann auch ein Austausch der Dosierscheibe 24, 50 und damit eine Größenanpassung der Dosierkammern 26, 52, 54 möglich sein. Gegebenenfalls könnte die Größenanpassung der Dosierkammern 26, 52, 54 auch durch unterschiedliche Einsätze in der Dosierscheibe 24, 50 realisiert werden.

## Patentansprüche

1. Vorrichtung (10, 12, 14) zum dosierten Befüllen eines Trinkhalms (34) mit einem Füllgut (22, 72)
- mit einer Aufnahmeeinheit (36) zur Aufnahme des Trinkhalms (34),
- mit zumindest einem Materialspeicher (20, 70) als Vorratsbehältnis für das Füllgut (22, 72),
- mit einer Befülleinheit mittels der eine definierte Menge des Füllguts (22, 72) aus dem zumindest einen Materialspeicher (20, 70) entnehmbar und in den Trinkhalm (34) überführbar ist,
- wobei die Befülleinheit zumindest eine Dosierkammer (26, 52, 54) aufweist, die verschieblich gelagert ist, so dass die Dosierkammer (26, 52, 54) abwechselnd in einer ersten Position (30, 58) und in einer zweiten Position (32, 60) vorhanden ist,
- wobei die Dosierkammer (26, 52, 54) in der ersten Position (30, 58) in Kontakt mit dem Materialspeicher (20, 70) steht, so dass Füllgut (22, 72) aus dem Materialspeicher (20, 70) in die Dosierkammer (26, 52, 54) einfüllbar ist,
- wobei die Dosierkammer (26, 52, 54) in der zweiten Position (32, 60) oberhalb des Trinkhalms (34) angeordnet ist, so dass das in der Dosierkammer (26, 52, 54) befindliche Füllgut (22, 72) in den Trinkhalm (34) entleerbar ist,
- **dadurch gekennzeichnet, dass**
- die Dosierkammer (26, 52, 54) in Hinrichtung und in die dazu Gegenrichtung verschiebbar ist.

2. Vorrichtung nach Anspruch 1,
- **dadurch gekennzeichnet, dass**
- die Dosierkammer (26, 52, 54) längsverschieblich gelagert ist.

3. Vorrichtung nach Anspruch 1 oder 2,
- **dadurch gekennzeichnet, dass**
- eine erste Dosierkammer (52) und eine zweite Dosierkammer (54) vorhanden ist,
- beide Dosierkammern (52, 54) abwechselnd in einer ersten Position (58) und einer zweiten Position (60) vorhanden sind,
- beide Dosierkammern (52, 54) in ihrer zweiten Position (60) oberhalb des Trinkhalms (34) in einer identischen Position vorhanden sind.

4. Vorrichtung nach Anspruch 3,
- **dadurch gekennzeichnet, dass**
- die beiden Dosierkammern (52, 54) jeweils durch eine Drehbewegung (56) von ihrer ersten Position (58) in ihre zweite Position (60) verschiebbar sind.

5. Vorrichtung nach Anspruch 3 oder 4,
- **dadurch gekennzeichnet, dass**
- ein erster Materialspeicher (20) und ein zweiter Materialspeicher (70) vorhanden ist,
- die erste Dosierkammer (52) in ihrer ersten Position (58) unterhalb des ersten Materialspeichers (20) und in ihrer zweiten Position (60) oberhalb des Trinkhalms (34) vorhanden ist,
- die zweite Dosierkammer (54) in ihrer ersten Position (58) unterhalb des zweiten Materialspeichers (70) und in ihrer zweiten Position (60) oberhalb des Trinkhalms (34) vorhanden ist.

6. Vorrichtung nach einem der vorstehenden Ansprüche,
- **dadurch gekennzeichnet, dass**
- zwischen der zumindest einen Dosierkammer (26, 52, 54) und dem oberen Rand des Trinkhalms (34) ein Trichterelement (44) angeordnet ist.

7. Vorrichtung nach einem der vorstehenden Ansprüche,
- **dadurch gekennzeichnet, dass**
- eine Wägeeinheit (46) vorhanden ist.

8. Vorrichtung nach einem der vorstehenden Ansprüche,
- **dadurch gekennzeichnet, dass**
- eine Zähleinheit (62) vorhanden ist,
- die Zähleinheit (62) die Anzahl der Positionswechsel der zumindest einen Dosierkammer (26, 52, 54) anzeigt.

9. Vorrichtung nach einem der vorstehenden Ansprüche,
- **dadurch gekennzeichnet, dass**
- eine Druckereinheit (48, 64) vorhanden ist.

10. Verfahren zum dosierten Befüllen eines Trinkhalms (34) mit einem Füllstoff (22, 72) mit folgenden Verfahrensschritten
- eine Dosierkammer (26, 52, 54) wird in ihrer ersten Position (30, 58) unterhalb eines Materialspeichers (20, 70) positioniert,
- der Füllstoff (22, 72) wird aus dem Materialspeicher (20, 70) in die Dosierkammer (26, 52, 54) überführt,
- die Dosierkammer (26, 52, 54) wird in einer ersten Richtung ein Stück weit aus ihrer ersten Position (30, 58) verschoben, so dass die Dosierkammer (26, 52, 54) in einer zweiten Position (32, 60) oberhalb des Trinkhalms (34) positioniert ist,
- der Füllstoff (22, 72) fällt aus der Dosierkammer (26, 52, 54) in den Trinkhalm (34),
- die Dosierkammer (26, 52, 54) wird in einer zur ersten Richtung entgegengesetzten zweiten Richtung wieder aus der zweiten Position (32, 60) in die erste Position (30, 58) verschoben, so dass die Dosierkammer (26, 52, 54) erneut mit Füllstoff (22, 72) befüllt werden kann.

11. Verfahren nach Anspruch 10,
- **dadurch gekennzeichnet, dass**
- mehrere Portionen des Füllstoffs (22, 72) in den Trinkhalm (34) gefüllt werden.

12. Verfahren nach Anspruch 11,
- **dadurch gekennzeichnet, dass**
- die Dosierkammer (26, 52, 54) zur Befüllung eines Trinkhalms (34) mehrmals von der ersten Position (30, 58) in die zweite Position (32, 60) und wieder in die erste Position (30, 58) überführt wird.

13. Verfahren nach einem der Ansprüche 10 bis 12,
- **dadurch gekennzeichnet, dass**
- eine erste Dosierkammer (52) und eine zweite Dosierkammer (54) vorhanden sind,
- die beiden Dosierkammern (52, 54) jeweils abwechselnd in ihrer ersten Position (58) und ihrer zweiten Position (60) vorhanden sind.

## Claims

1. Device (10, 12, 14) for the metered filling of a drinking straw (34) with a filling material (22, 72)
- comprising a receiving unit (36) for receiving the drinking straw (34),
- comprising at least one material store (20, 70) as a storage container for the filling material (22, 72),
- comprising a filling unit, a defined quantity of the filling material (22, 72) being able to be removed from the at least one material store (20, 70) and transferred into the drinking straw (34) by means of said filling unit,
- wherein the filling unit comprises at least one metering chamber (26, 52, 54), which is displaceably mounted so that the metering chamber (26, 52, 54) is present alternately in a first position (30, 58) and in a second position (32, 60),
- wherein in the first position (30, 58) the metering chamber (26, 52, 54) is in contact with the material store (20, 70) so that filling material (22, 72) is able to be filled into the metering chamber (26, 52, 54) from the material store (20, 70),
- wherein in the second position (32, 60) the metering chamber (26, 52, 54) is arranged above the drinking straw (34) so that the filling material (22, 72) located in the metering chamber (26, 52, 54) is able to be emptied into the drinking straw (34),
- **characterized in that**
- the metering chamber (26, 52, 54) is displaceable in the forward direction and in the opposing direction thereto.

2. Device according to Claim 1,
- **characterized in that**
- the metering chamber (26, 52, 54) is mounted so as to be longitudinally displaceable.

3. Device according to Claim 1 or 2,
- **characterized in that**
- a first metering chamber (52) and a second metering chamber (54) are present,
- the two metering chambers (52, 54) are present alternately in a first position (58) and in a second position (60),
- the two metering chambers (52, 54) are present, in their second position (60), in an identical position above the drinking straw (34).

4. Device according to Claim 3,
- **characterized in that**
- the two metering chambers (52, 54) are displaceable in each case from their first position (58) into their second position (60) by a rotational movement (56).

5. Device according to Claim 3 or 4,
- **characterized in that**
- a first material store (20) and a second material store (70) are present,
- the first metering chamber (52) is present, in its first position (58), below the first material store (20) and, in its second position (60), above the drinking straw (34),
- the second metering chamber (54) is present, in its first position (58), below the second material store (70) and, in its second position (60), above the drinking straw (34).

6. Device according to one of the preceding claims,
- **characterized in that**
- a funnel element (44) is arranged between the at least one metering chamber (26, 52, 54) and the upper edge of the drinking straw (34).

7. Device according to one of the preceding claims,
- **characterized in that**
- a weighing unit (46) is present.

8. Device according to one of the preceding claims,
- **characterized in that**
- a counting unit (62) is present,
- the counting unit (62) displays the number of changes in position of the at least one metering chamber (26, 52, 54).

9. Device according to one of the preceding claims,
- **characterized in that**
- a printer unit (48, 64) is present.

10. Method for the metered filling of a drinking straw (34) with a filling material (22, 72), comprising the following method steps
- a metering chamber (26, 52, 54) is positioned in its first position (30, 58) below a material store (20, 70),
- the filling material (22, 72) is transferred from the material store (20, 70) into the metering chamber (26, 52, 54),
- the metering chamber (26, 52, 54) is displaced in a first direction slightly out of its first position (30, 58) so that the metering chamber (26, 52, 54) is positioned in a second position (32, 60) above the drinking straw (34),
- the filling material (22, 72) falls out of the metering chamber (26, 52, 54) into the drinking straw (34),
- the metering chamber (26, 52, 54) is displaced again, in a second direction opposed to the first direction, from the second position (32, 60) into the first position (30, 58) so that the metering chamber (26, 52, 54) can be refilled with filling material (22, 72) .

11. Method according to Claim 10,
- **characterized in that**
- a plurality of portions of filling material (22, 72) are filled into the drinking straw (34).

12. Method according to Claim 11,
- **characterized in that**,
- for filling a drinking straw (34), the metering chamber (26, 52, 54) is repeatedly transferred from the first position (30, 58) into the second position (32, 60) and back again into the first position (30, 58).

13. Method according to one of Claims 10 to 12,
- **characterized in that**
- a first metering chamber (52) and a second metering chamber (54) are present,
- the two metering chambers (52, 54) are present in each case alternately in their first position (58) and in their second position (60).

## Revendications

1. Dispositif (10, 12, 14) destiné au remplissage dosé d'une paille (34) avec un produit de remplissage (22, 72),
- comprenant une unité de réception (36) pour recevoir la paille (34),
- comprenant au moins un réservoir de matériau (20, 70) en tant que récipient de stockage pour le produit de remplissage (22, 72),
- comprenant une unité de remplissage au moyen de laquelle une quantité définie du produit de remplissage (22, 72) peut être prélevée de l'au moins un réservoir de matériau (20, 70) et peut être transférée à la paille (34),
- l'unité de remplissage présentant au moins une chambre de dosage (26, 52, 54), qui est supportée de manière déplaçable de telle sorte que la chambre de dosage (26, 52, 54) soit prévue en alternance dans une première position (30, 58) et dans une deuxième position (32, 60),
- la chambre de dosage (26, 52, 54), dans la première position (30, 58), étant en contact avec le réservoir de matériau (20, 70) de telle sorte que le produit de remplissage (22, 72) puisse être introduit depuis le réservoir de matériau (20, 70) dans la chambre de dosage (26, 52, 54),
- la chambre de dosage (26, 52, 54), dans la deuxième position (32, 60), étant disposée au-dessus de la paille (34), de telle sorte que le produit de remplissage (22, 72) se trouvant dans la chambre de dosage (26, 52, 54) puisse être versé dans la paille (34),
- **caractérisé en ce que**
- la chambre de dosage (26, 52, 54) peut être déplacée dans la direction vers l'avant et dans la direction opposée.

2. Dispositif selon la revendication 1,
- **caractérisé en ce que**
- la chambre de dosage (26, 52, 54) est supportée de manière déplaçable longitudinalement.

3. Dispositif selon la revendication 1 ou 2,
- **caractérisé en ce que**
- une première chambre de dosage (52) et une deuxième chambre de dosage (54) sont prévues,
- les deux chambres de dosage (52, 54) sont prévues en alternance dans une première position (58) et une deuxième position (60),
- les deux chambres de dosage (52, 54), dans leur deuxième position (60), sont prévues au-dessus de la paille (34) dans une position identique.

4. Dispositif selon la revendication 3,
- **caractérisé en ce que**
- les deux chambres de dosage (52, 54) peuvent à chaque fois être déplacées par un mouvement de rotation (56) de leur première position (58) à leur deuxième position (60).

5. Dispositif selon la revendication 3 ou 4,
- **caractérisé en ce**
- **qu'**un premier réservoir de matériau (20) et un deuxième réservoir de matériau (70) sont présents,
- la première chambre de dosage (52), dans sa première position (58), est prévue sous le premier réservoir de matériau (20) et, dans sa deuxième position (60), est prévue au-dessus de la paille (34),
- la deuxième chambre de dosage (54), dans sa première position (58), est prévue sous le deuxième réservoir de matériau (70), et dans sa deuxième position (60), est prévue au-dessus de la paille (34).

6. Dispositif selon l'une quelconque des revendications précédentes,
- **caractérisé en ce**
- **qu'**entre l'au moins une chambre de dosage (26, 52, 54) et le bord supérieur de la paille (34) est disposé un élément en entonnoir (44).

7. Dispositif selon l'une quelconque des revendications précédentes,
- **caractérisé en ce**
- **qu'**une unité de pesage (46) est prévue.

8. Dispositif selon l'une quelconque des revendications précédentes,
- **caractérisé en ce que**
- une unité de comptage (62) est prévue,
- l'unité de comptage (62) indique le nombre de changements de position de l'au moins une chambre de dosage (26, 52, 54).

9. Dispositif selon l'une quelconque des revendications précédentes,
- **caractérisé en ce**
- **qu'**une unité d'impression (48, 64) est prévue.

10. Procédé pour le remplissage dosé d'une paille (34) avec un produit de remplissage (22, 72), comprenant les étapes de procédé suivantes :
- une chambre de dosage (26, 52, 54) est positionnée dans sa première position (30, 58) sous un réservoir de matériau (20, 70),
- le produit de remplissage (22, 72) est transféré du réservoir de matériau (20, 70) à la chambre de dosage (26, 52, 54),
- la chambre de dosage (26, 52, 54) est déplacée dans une première direction quelque peu à l'écart de sa première position (30, 58), de telle sorte que la chambre de dosage (26, 52, 54) soit positionnée dans une deuxième position (32, 60) au-dessus de la paille (34),
- le produit de remplissage (22, 72) tombe depuis la chambre de dosage (26, 52, 54) dans la paille (34),
- la chambre de dosage (26, 52, 54) est déplacée, dans une deuxième direction opposée à la première direction, à nouveau de la deuxième position (32, 60) à la première position (30, 58), de telle sorte que la chambre de dosage (26, 52, 54) puisse à nouveau être remplie avec le produit de remplissage (22, 72).

11. Procédé selon la revendication 10,
- **caractérisé en ce que**
- plusieurs portions du produit de remplissage (22, 72) sont versées dans la paille (34).

12. Procédé selon la revendication 11,
- **caractérisé en ce que**
- la chambre de dosage (26, 52, 54) pour le remplissage d'une paille (34) est transférée plusieurs fois de la première position (30, 58) à la deuxième position (32, 60) et à nouveau à la première position (30, 58).

13. Procédé selon l'une quelconque des revendications 10 à 12,
- **caractérisé en ce que**
- une première chambre de dosage (52) et une deuxième chambre de dosage (54) sont prévues,
- les deux chambres de dosage (52, 54) sont à chaque fois prévues en alternance dans leur première position (58) et leur deuxième position (60).
